# EUROPEAN PATENT SPECIFICATION

(11) **EP 0 714 941 B1**
(45) Date of publication and mention of the grant of the patent: **04.02.1998**
(21) Application number: 95307899.5
(22) Date of filing: 06.11.1995
(51) Int. Cl.: C08L 25/16, C08L 51/04, C08L 55/02

(54) **Impact modified alpha-alkyl vinyl aromatic-vinyl cyanide copolymer compositions**
Schlagzäh modifizierte Zusammensetzungen auf Basis von Copolymeren aus alpha-alkyl Vinylaromaten und Vinylcyanid
Compositions résistantes aux chocs à base de copolymères d'un composé vinyle aromatique alpha alcoyl substitué et de cyanure de vinyle

(30) Priority: 21.11.1994 US 342954
(43) Date of publication of application: 05.06.1996
(73) Proprietor: GENERAL ELECTRIC COMPANY, Schenectady, NY 12345 (US)
(72) Inventor: Kuruganti, Vijaya Kumar, Washington, West Virginia 26181 (US); Gaggar, Satish Kumar, Parkersburg, West Virginia 26101 (US); Burger, James Christopher, Parkersburg, West Virginia 26101 (US); Roettger, Louis George, Vienna, West Virginia 22180 (US)
(74) Representative: Szary, Anne Catherine, Dr.

(56) References cited:
- EP-A- 0 043 613
- EP-A- 0 048 059
- EP-A- 0 129 796
- EP-A- 0 129 815
- WO-A-94/24210
- CA-A- 1 318 737

## Description

The present invention relates to alpha-alkyl vinyl aromatic-vinyl cyanide copolymer compositions, and more particularly relates to impact modified alpha-alkyl vinyl aromatic-vinyl cyanide copolymer compositions.

### DESCRIPTION OF THE RELATED ART

Alpha-alkyl vinyl aromatic-vinyl cyanide copolymers, such as alpha-methylstyrene-acrylonitrile copolymers, exhibit high heat deflection temperatures, but are generally brittle and exhibit higher than desired levels of viscosity. Impact modification of such copolymers can be achieved by blending therein a rubber modified graft copolymer, but such impact modification can result in a composition exhibiting a higher than desired level of viscosity, a lower than desired level of notched Izod impact strength, and a higher than desired level of opacity. A high level of opacity requires a relatively high level of pigment loading to attain a given level of color intensity.

Consequently, there is the need and desire to provide an alpha-alkyl vinyl aromatic-vinyl cyanide copolymer composition exhibiting a relatively high level of notched izod impact strength, a relatively low level of viscosity, and a relatively low level of opacity compared to various other impact modified alpha-alkyl vinyl aromatic-vinyl cyanide copolymer compositions.

### Summary of the Invention

A thermoplastic resin composition is provided comprising (a) an alpha-alkyl vinyl aromatic-vinyl cyanide copolymer, (b) a mass polymerized graft copolymer and (c) an emulsion polymerized graft copolymer made by reacting a vinyl aromatic monomer and a vinyl cyanide monomer in the presence of a mechanically agglomerated vinyl aromatic-diene rubber latex and a redox initiator. The compositions exhibit relatively low viscosities, low opacities, and high notched izod impact strengths compared to various other impact modified alpha-alkyl vinyl aromatic-vinyl cyanide copolymer compositions.

### Detailed Description of the Invention

A thermoplastic composition is provided comprising (a) an alpha-alkyl vinyl aromatic-vinyl cyanide copolymer present at a level of from 10 to 55 percent by weight, more preferably from 35 to 45 percent by weight thereof, and most preferably about 40 percent by weight thereof, based on the total weight of the composition; (b) a mass polymerized graft copolymer comprising (i) a diene rubber substrate present at a level of from 5 to 25 percent by weight based on the total weight of the mass polymerized graft copolymer, and (ii) a vinyl aromatic-vinyl cyanide superstrate present at a level of from 75 to 95 percent by weight based on the total weight of the mass polymerized graft copolymer, the mass polymerized graft copolymer is present at a level of from 15 to 50 percent by weight based on the total weight of the composition, preferably from 25 to 40 percent by weight thereof, and most preferably about 35 percent by weight thereof, and (c) an emulsion polymerized graft copolymer comprising (i) a vinyl aromatic-diene rubber substrate having a weight average particle size of from 0.21 to 0.40 µm, said substrate being formed by mechanical agglomeration of a latex of vinyl aromatic-diene particles having a weight average particle size of from 0.05 µm and 0.10 µm to form a latex of agglomerated particles, and (ii) a vinyl aromatic-vinyl cyanide copolymer superstrate formed by reacting a vinyl aromatic monomer and a vinyl cyanide monomer in the presence of a redox initiator and said latex of agglomerated particles, wherein said emulsion polymerized graft copolymer is present at a level of from 15 to 40 percent by weight based on the total weight of the composition, more preferably at a level of from 20 to 30 percent by weight thereof, and most preferably at a level of about 25 percent by weight thereof. Optionally the composition may further contain 0 to 25 percent by weight of a non-graft, non-substituted vinyl aromatic-vinyl cyanide copolymer, such as non (alkyl substituted) styrene-acrylonitrile copolymer based on the total weight of the composition, for further example, 5 to 20 percent by weight thereof.

The mass polymerized graft copolymer may be made by any suitable mass polymerization process as are conventionally known, and may be made by the process set out in US-A-5 414 045 (Sue et al.), and which describes a multistage bulk process which involves reacting in a plug flow grafting reactor a liquid feed composition comprising vinylidene aromatic monomer, unsaturated nitrile monomer and rubbery synthetic butadiene polymer to a point prior to phase inversion, reacting the first polymerization product therefrom in a continuous stirred tank reactor to yield a phase inverted second polymerization product which then can be further reacted in a finishing reactor, and then devolatilized to produce the desired final product. Continuous mass polymerization processes may also be used, and a mass polymerization process is set out in Carter, U.S. Patent No. 3,903,202, issued March 1976.

The mass polymerized graft copolymer comprises (1) a diene rubber substrate preferably present at a level of from 5 to 25 percent by weight based on the total weight of the mass polymerized graft copolymer, and more preferably present at a level of from 7 to 15 percent by weight thereof, and most preferably present at a level of from 10 to 12 percent by weight thereof; and (ii) a vinyl aromatic-diene superstrate preferably present at a level of from 75 to 95 percent by weight based on the total weight of the mass polymerized graft copolymer, more preferably at a level of from 85 to 93 percent by weight thereof, and most preferably present at a level of from 88 to 90 percent by weight thereof.

The diene rubber substrate of the mass polymerized graft copolymer is preferably a 1,3 butadiene substrate which may be a homopolymer or a copolymer containing up to 50 percent by weight of one or more comonomers. An example of such a copolymer is butadiene-styrene copolymers. The starting diene rubber must be soluble in a mixture of styrene and acrylonitrile monomers.

The vinyl aromatic-vinyl cyanide superstrate of the mass polymerized graft copolymer is a copolymer of a vinyl aromatic monomer such as styrene and a vinyl cyanide monomer such as acrylonitrile. Suitable vinyl aromatic monomers and vinyl cyanide monomers are set out below. Preferably the vinyl aromatic is present at a level of from 50 to 90 percent by weight based on the total weight of the superstrate, more preferably from 70 to 80 percent by weight thereof, and most preferably about 75 percent by weight thereof. Preferably the vinyl cyanide is present at a level of from 10 to 50 percent by weight based on the total weight of the superstrate, more preferably from 20 to 30 percent by weight thereof, and most preferably about 25 percent by weight thereof.

The alpha-alkyl substituted vinyl aromatic-vinyl cyanide copolymer preferably comprises (in reacted form as is well understood) the alpha-alkyl substituted vinyl aromatic monomer at a level of from 50 to 90 percent by weight based on the total weight of the copolymer, preferably from 60 to 80 percent by weight thereof, more preferably from 65 to 75 percent by weight thereof, and most preferably about 70 percent by weight thereof. The vinyl cyanide monomer is preferably present at a level of from 10 to 50 percent by weight based on the total weight of the copolymer, preferably from 20 to 40 percent by weight thereof, more preferably from 25 to 35 percent by weight thereof, and most preferably about 30 percent by weight thereof. The copolymers may also contain 20 percent or less of an additional monomer such as non-substituted styrene, and is preferably free of such additional monomers, and is preferably free of acrylate monomers such as alkyl alka acrylate monomers such as methylmethacrylate.

The alpha-alkyl vinyl aromatic monomer is preferably an alpha C₁-C₄ alkyl vinyl aromatic monomer, and is more preferably an alpha-methyl vinyl aromatic monomer, and is most preferably alpha-methylstyrene.

The emulsion polymerized graft copolymer is critical to the present invention to attain the desired combination of properties. The emulsion polymerized graft copolymer comprises (a) a vinyl aromatic-diene rubber substrate having a weight average particle size of from 0.21 µm to 0.40 µm, wherein the substrate is formed by mechanical agglomeration of a latex of vinyl aromatic-diene particles having a weight average particle size of from 0.05 µm to 0.10 µm, and (b) a vinyl aromatic-vinyl cyanide copolymer superstrate formed by reacting a vinyl aromatic monomer and a vinyl cyanide monomer in the presence of a redox initiator and the latex of agglomerated particles. The agglomerated particle substrate more preferably has a weight average particle size of from 0.25 µm to 0.35 µm, and most preferably from 0.27 µm to 0.30 µm. The pre-agglomeration rubber particles more preferably have a weight average particle size of between 0.07 µm and 0.09 µm, and most preferably between 0.08 µm and 0.09 µm. The vinyl aromatic-diene rubber substrate preferably has a vinyl aromatic component level of from 5 to 40 percent by weight based on the total weight of the substrate, more preferably from 10 to 30 percent by weight thereof, and most preferably from 15 to 20 percent by weight thereof; and has a diene component level of from 60 to 95 percent by weight based on the total weight of the substrate, more preferably from 70 to 90 percent by weight thereof, and most preferably from 80 to 85 percent by weight thereof. The vinyl aromatic-vinyl cyanide superstrate preferably comprises the vinyl aromatic at a level of from 60 to 90 percent by weight based on the total weight of the substrate, and more preferably from 65 to 80 percent by weight thereof, and most preferably from 70 to 75 percent by weight thereof. The vinyl cyanide is preferably present at a level of from 10 to 40 percent by weight based on the total weight of the superstrate, more preferably from 20 to 35 percent by weight thereof, and most preferably from 25 to 30 percent by weight thereof. The substrate is preferably present in the emulsion polymerized graft copolymer at a level of from 40 to 80 percent by weight based on the total weight of the emulsion polymerized graft copolymer, more preferably from 45 to 70 percent by weight thereof, and most preferably from 50 to 60 percent by weight thereof. The superstrate is preferably present in the emulsion polymerized graft copolymer at a level of from 20 to 60 percent by weight based on the total weight of the polymerized graft copolymer, more preferably from 30 to 50 percent by weight thereof, and most preferably from 40 to 50 percent by weight thereof.

The vinyl aromatic monomers which may be employed for the emulsion polymerized graft copolymer and for the mass polymerized graft copolymer include styrene, alpha-methyl styrene, halostyrenes i.e. dibromostyrene, mono or di alkyl, alkoxy or hydroxy substitute groups on the nuclear ring of the vinyl aromatic monomer i.e. vinyl toluene, vinylxylene, butylstyrene, para-hydroxystyrene or methoxystyrene or mixtures thereof. The vinyl aromatic monomers utilized are generically described by the following formula: 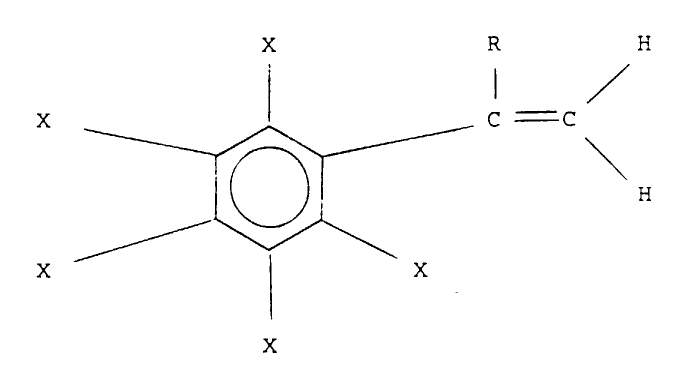 wherein X is selected from the group consisting of hydrogen, alkyl groups of 1 to 5 carbon atoms, cycloalkyl, aryl, alkaryl, aralkyl, alkoxy, aryloxy, and halogens. R is selected from the group consisting of hydrogen, alkyl groups of 1 to 5 carbon atoms and halogens such as bromine and chlorine. Examples of substituted vinylaromatic compounds include styrene, 4-methylstyrene, 3,5-diethylstyrene, 4-n-propylstyrene, α-methylstyrene, α-methyl vinyltoluene, α-chlorostyrene, α-bromostyrene, dichlorostyrene, dibromostyrene, tetrachlorostyrene, and mixtures thereof. The preferred vinyl aromatic monomers used are styrene and/or α-methylstyrene.

Suitable vinyl cyanide monomers include acrylonitrile and substituted vinyl cyanides such as methacrylonitrile. The acrylonitrile and substituted acrylonitrile are described generically by the following formula: 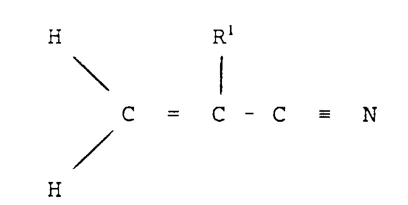 wherein R¹ may be selected from the same group set out for R as previously defined. Examples of such monomers include acrylonitrile, ethacrylonitrile, methacrylonitrile, a-chloroacrylonitrile, and α-bromoacrylonitrile.

Specific conjugated diene monomers normally utilized in preparing the rubber substrates of the graft copolymers are generically described by the following formula: 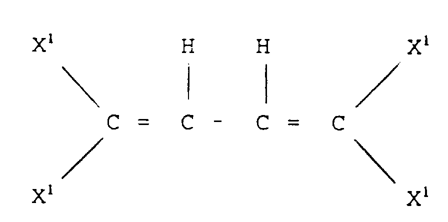 wherein X¹ is selected from the group consisting of hydrogen, alkyl groups containing from one to five carbon atoms, chlorine or bromine. Examples of dienes that may be used are butadiene, isoprene, 1,3-heptadiene, methyl-1,3-pentadiene, 2,3-dimethylbutadiene, 2-ethyl-1,3-pentadiene 1,3- and 2,4-hexadienes, chloro and bromo substituted butadienes such as dichlorobutadiene, bromobutadiene, dibromobutadiene and mixtures thereof. A preferred conjugated diene is 1,3 butadiene.

Preferred graft superstrates include copolymers of styrene and acrylonitrile, copolymers of α-methylstyrene and acrylonitrile or copolymers with up to 50% by weight of C₁-C₆ alkylacrylates, acrylonitrile or styrene. Specific examples of monovinylidene aromatic graft copolymers include but are not limited to the following: acrylonitrile-butadiene-styrene (ABS), and methylmethacrylate-acrylonitrile-butadiene-styrene(MABS). Preferably the superstrate is free of alkylacrylates such as methylmethacrylates.

Suitable redox initiators include di-tert-butyl peroxide, benzoyl peroxide, lauroyl peroxide, oleyl peroxide, toluyl peroxide, di-tert-butyl diperphthalate, tert-butyl peracetate, tert-butyl perbenzoate, dicumyl peroxide, tert-butyl peroxide, isopropyl carbonate, 2,5-dimethyl-2,5-dimethyl-2,5-di(tert-butylperoxy)hexane, 2,5-dimethyl-2,5-di(tert-butylperoxy) hexane-3 or hexyne-3, tert-butyl hydroperoxide, cumene hydroperoxide, p-menthane hydroperoxide, cyclopentane hydroperoxide, pinane hydroperoxide, 2,5-dimethylhexane-2,5-dihydroperoxide and mixtures thereof. The redox initiator results in good graft coverage, thereby preventing rubber agglomeration during melt mixing.

The thermoplastic compositions are useful for making high heat molded articles such as automotive parts such as interior trim, and preferably contain from 0.05 to 10 percent by weight pigments, more preferably from 0.1 to 5 percent by weight pigments, such as organic pigments, based on the total weight of the composition. The reduced opacity of the present compositions allows for the ability of reduced levels of pigment loading to achieve the desired level of color intensity thereby reducing the potential expense of higher pigment loadings.

### EXAMPLES

The ABS polyblends of the present invention comprise a matrix copolymer of alpha-methylstyrene and acrylonitrile blended with a mass polymerized acrylonitrile-butadiene-styrene graft copolymer (Bulk ABS) and an emulsion polymerized acrylonitrile-butadiene-styrene graft copolymer containing high rubber content (HRG). The polyblends were melt mixed in a 30 mm twin screw extruder at a temperature sufficient to melt all the components and in the proportions described in Table 1. The resulting pellets were injection molded into test specimens at a stock temp. of 246°C and mold temp. of 66°C. Viscosities of pellets were measured by Capillary rheometer at 260°F (127°C) according to ASTM D3835. Notched izod testing was carried out according to ASTM D256. Dart impact testing was done according to ASTM D3039. Heat deflection temperature (HDT) was measured according to ASTM D648-82. The surface gloss was measured by Gardner gloss meter according to ASTM D523. Opacity of the blends is measured on a 25D Hunter Colorimeter and expressed as percent. Yellowness Index was measured on a 25D Hunter Colorimeter according to ASTM E313.

The Emulsion HRG-1 is produced by carrying out graft polymerization on small particles (Mean particle size of 0.085 microns) of butadiene-styrene (85/15) with styrene and acrylonitrile using a thermal vazo initiator. The small rubber particles in HRG-1 aggregate during melt mixing and molding of ABS polyblend.

The Emulsion HRG-2 is produced by grafting on to latex agglomeration (Mean particle size of 0.28 microns) of butadiene-styrene rubber (85/15) with styrene and acrylonitrile monomers using a redox initiator system. Latex agglomeration of small (Mean particle size of 0.085 m) styrene-butadiene (15/85) rubber particles was carried out by a mechanical agglomeration process in order to obtain latex agglomerated particles (mean particle size of 0.28 microns). All HRG (HRG-1 and HRG-2) contained about 50 percent rubber.

SAN is a copolymer of styrene-acrylonitrile (75/25 by weight) produced in mass polymerization. Weight average molecular weight (Mw) of SAN is 100,000 and the number average molecular weight (Mn) is 40,000.

Bulk ABS is a mass polymerized graft copolymer of acrylonitrile-butadiene-styrene. Weight ratio of acrylonitrile-butadiene-styrene in bulk ABS is 22/11/67. Rubber particle size range in Bulk ABS varies from 0.5 to 1.5 microns.

AMSAN is a copolymer of alpha-methylstyrene and acrylonitrile (70/30) and commercially available from BASF.

EBS Wax (N,N' -ethylene bis(stearamide)) is a commercially available lubricant and is present in examples A and 1 at a level of 1 percent by weight.

Pluronic F-88 is a commercially available block copolymer of ethylene oxide and propylene oxide and typically used as a release agent and is present in examples A and 1 at a level of 0.25 percent by weight.

**TABLE 1**

| | A | 1 | B |
|---|---|---|---|
| Bulk ABS | - | 35 | 100 |
| AMSAN | 45 | 40 | - |
| SAN | 20 | - | - |
| HRG-1 | 35 | - | - |
| HRG-2 | - | 25 | - |
| Capillary Viscosity | | | |
| 260°F (127°C) (poise) | | | |
| 1000/sec Shear | 2246 | 1973 | 1657 |
| 1/8" (3 mm) N.I. Impact | | | |
| RT (ft-lb/in)¹⁾ | 4.7 | 6.2 | 2.8 |
| Dart Impact | | | |
| RT (ft-lb)²⁾ | 28 | 26 | 39 |
| Std. Dev. | 6 | 10 | 1 |
| HDT (1/8"=3mm), IMU | | | |
| 66 psi (0.455 MPa) (°C) | 97 | 97 | 91 |
| 60° Gloss | 88 | 90 | 76 |
| 1/8" (3mm) Opacity (%) | 83 | 81 | 72 |
| Yellowness Index | 24 | 30 | 18 |

| | | | |
|---|---|---|---|
| ¹⁾ 1 ft-lb/in ≙ 53,38 J/m | | | |
| ²⁾ 1 ft-lb ≙ 1,356 Nm | | | |

Formulation -B (Bulk ABS) exhibits poor heat resistance and izod impact resistance compared to formulations 1 and A. Formulation -1 is new and novel composition described in this invention. Formulation -1 shows excellent impact/flow balance compared to formulation -A without compromising heat resistance and translucency.

## Claims

1. A thermoplastic composition comprising:
(a) an alpha-alkyl vinyl aromatic-vinyl cyanide copolymer present at a level of from 10 to 55 percent by weight based on the total weight of the composition;
(b) a mass polymerized graft copolymer present at a level of from 15 to 50 percent by weight based on the total weight of the composition, said mass polymerized graft copolymer comprising
(i) a diene rubber substrate present at a level of from 5 to 25 percent by weight based on the total weight of the mass polymerized graft copolymer, and
(ii) a vinyl aromatic-vinyl cyanide superstrate present at a level of from 75 to 95 percent by weight based on the total weight of the mass polymerized graft copolymer; and
(c) an emulsion polymerized graft copolymer comprising
(i) a vinyl aromatic-diene rubber substrate having a weight average particle size of from 0.21 µm to 0.40 µm, said substrate being formed by mechanical agglomeration of a latex of vinyl aromatic-diene particles having a weight average particle size of from 0.05 µm and 0.10 µm to form a latex of agglomerated particles, and
(ii) a vinyl aromatic-vinyl cyanide copolymer superstrate formed by reacting a vinyl aromatic monomer and a vinyl cyanide monomer in the presence of a redox initiator and said latex of agglomerated particles, wherein said emulsion polymerized graft copolymer is present at a level of from 15 to 40 percent by weight based on the total weight of the composition.

2. The composition of Claim 1 wherein said composition consists essentially of said (a), (b) and (c).

3. The composition of Claim 1 wherein said composition consists of said (a), (b) and (c).

4. The composition of Claim 1 wherein said alpha-alkyl vinyl aromatic-vinyl cyanide copolymer is an alpha-methylstyrene-acrylonitrile copolymer.

5. The composition of Claim 4 wherein said alpha-methylstyrene-acrylonitrile copolymer is present at a level of from 35 to 45 percent by weight based on the total weight of the composition.

6. The composition of Claim 4 wherein said alpha-methylstyrene-acrylonitrile copolymer is present at a level of about 40 percent by weight based on the total weight of the composition.

7. The composition of Claim 1 wherein said mass polymerized graft copolymer is present at a level of from 25 to 40 percent by weight based on the total weight of the composition.

8. The composition of Claim 1 wherein said mass polymerized graft copolymer is present at a level of about 35 percent by weight based on the total weight of the composition.

9. The composition of Claim 1 wherein said emulsion polymerized graft copolymer is present at a level of from 20 to 30 percent by weight based on the total weight of the composition.

10. The composition of Claim 1 wherein said emulsion polymerized graft copolymer is present at a level of about 25 percent by weight based on the total weight of the composition.

11. The composition of Claim 1 wherein the substrate of the emulsion polymerized graft copolymer is a styrene-butadiene rubber comprising from 70 to 90 percent butadiene based on the total weight of the substrate.

12. The composition of Claim 1 wherein said composition further comprises from 5 to 20 percent by weight of a non-graft non(alkyl substituted) styrene-acrylonitrile copolymer based on the total weight of the composition.

## Patentansprüche

1. Thermoplastische Mischung, aufweisend
(a) ein a-alkylvinylaromatisch-vinylcyanidisches Copolymer, das mit einem Anteil von 10 bis 55 Gew.-% bezogen auf das Gesamtgewicht der Mischung vorhanden ist,
(b) ein in Masse polymerisiertes Pfropfcopolymer, das mit einem Anteil von 10 bis 50 Gew.-% bezogen auf das Gesamtgewicht der Mischung vorhanden ist; wobei das in Masse polymerisierte Pfropfcopolymer aufweist
(i) einen Dien-Kautschuk, der mit einem Anteil von 5 bis 25 Gew.-% bezogen auf das Gesamtgewicht des in Masse polymerisierten Pfropfcopolymers vorhanden ist, und
(ii) ein vinylaromatisch-vinylcyanidisches Substrat (superstrate), das mit einem Anteil von 75 bis 95 Gew.-% bezogen auf das Gesamtgewicht des in Masse polymerisierten Pfropfcopolymers vorhanden ist; und
(c) ein emulsionspolymerisiertes Pfropfcopolymer, aufweisend
(i) ein vinylaromatisch-dienisches Kautschuk-Substrat mit einem Gewichtsmittel der Partikelgröße von 0,21 bis 0,40 µm; wobei das Substrat durch mechanische Agglomeration eines Latex aus vinylaromatisch-dienischen Partikeln mit einem Gewichtsmittel der Partikelgröße von 0,05 bis 0,1 µm hergestellt wurde, um einen Latex aus agglomerierten Partikeln zu bilden, und
(ii) ein vinylaromatisch-vinylcyanidisches Copolymer-Substrat (superstrate), hergestellt durch Umsetzung eines vinylaromatischen Monomeren und eines vinylcyanidischen Monomeren in Gegenwart eines Redox-Initiators und des Latex aus agglomerierten Partikeln, wobei das emulsionspolymerisierte Pfropfcopolymer mit einem Anteil von 15 bis 40 Gew.-% bezogen auf das Gesamtgewicht der Mischung vorhanden ist.

2. Mischung nach Anspruch 1, dadurch gekennzeichnet, daß die Mischung im wesentlichen aus den Komponenten (a), (b) und (c) besteht.

3. Mischung nach Anspruch 1, dadurch gekennzeichnet, daß die Mischung aus den Komponenten (a), (b) und (c) besteht.

4. Mischung nach Anspruch 1, dadurch gekennzeichnet, daß α-alkylvinylaromatisch-vinylcyanidische Copolymer α-Methylstyrol-Acrylnitril-Copolymer ist.

5. Mischung nach Anspruch 4, dadurch gekennzeichnet, daß das α-Methylstyrol-Acrylnitril-Copolymere mit einem Anteil von 35 bis 45 Gew.- % bezogen auf das Gesamtgewicht der Mischung vorhanden ist.

6. Mischung nach Anspruch 4, dadurch gekennzeichnet, daß das α-Methylstyrol-Acrylnitril-Copolymere mit einem Anteil von etwa 40 Gew.-% bezogen auf das Gesamtgewicht der Mischung vorhanden ist.

7. Mischung nach Anspruch 1, dadurch gekennzeichnet, daß das in Masse polymerisierte Pfropfcopolymers mit einem Anteil von 25 bis 40 Gew.-% bezogen auf das Gesamtgewicht der Mischung vorhanden ist.

8. Mischung nach Anspruch 1, dadurch gekennzeichnet, daß das in Masse polymerisierte Pfropfcopolymers mit einem Anteil von etwa 35 Gew.-% bezogen auf das Gesamtgewicht der Mischung vorhanden ist.

9. Mischung nach Anspruch 1, dadurch gekennzeichnet, daß das emulsionspolymerisierte Pfropfcopolymere mit einem Anteil von 20 bis 30 Gew.-% bezogen auf das Gesamtgewicht der Mischung vorhanden ist.

10. Mischung nach Anspruch 1, dadurch gekennzeichnet, daß das emulsionspolymerisierte Pfropfcopolymere mit einem Anteil von etwa 25 Gew.-% bezogen auf das Gesamtgewicht der Mischung vorhanden ist.

11. Mischung nach Anspruch 1, dadurch gekennzeichnet, daß das emulsionspolymerisierte Pfropfcopolymere Styrol-Butadien-Kautschuk ist, aufweisend 70 - 90% Butadien bezogen auf das Gesamtgewicht des Substrats.

12. Mischung nach Anspruch 1, dadurch gekennzeichnet, daß die Mischung des weiteren 5 bis 20 Gew.-% bezogen auf das Gesamtgewicht der Mischung eines nicht-gepfropften nicht-(Alkyl-substituierten) Styrol-Acrylnitril-Copolymers aufweist.

## Revendications

1. Composition thermoplastique qui comprend :
(a) un copolymère monomère alpha-alkylvinylique aromatique/cyanure de vinyle présent en une quantité de 10 à 55 % en poids par rapport au poids total de la composition ;
(b) un copolymère de greffage polymérisé en masse présent en une quantité de 15 à 50 % en poids par rapport au poids total de la composition, ledit copolymère de greffage polymérisé en masse comprenant :
(i) un substrat en caoutchouc diénique présent en une quantité de 5 à 25 % en poids par rapport au poids total du copolymère de greffage polymérisé en masse, et
(ii) une couche supérieure de monomère vinylique aromatique/cyanure de vinyle présente en une quantité de 75 à 95 % en poids par rapport au poids total du copolymère de greffage polymérisé en masse ; et
(c) un copolymère de greffage polymérisé en émulsion comprenant :
(i) un substrat en monomère vinylique aromatique/caoutchouc diénique présentant une taille moyenne pondérée de particules de 0,21 à 0,40 µm, ledit substrat étant formé par agglomération mécanique d'un latex de particules de monomère vinylique aromatique/diène présentant une taille moyenne pondérée de particules de 0,05 à 0,10 µm pour former un latex de particules agglomérées, et
(ii) une couche supérieure de copolymère monomère vinylique aromatique/cyanure de vinyle formé par réaction d'un monomère vinylique aromatique et du cyanure de vinyle monomère en présence d'un amorceur d'oxydo-réduction et dudit latex de particules agglomérées, dans lequel ledit copolymère de greffage polymérisé en émulsion est présent en une quantité de 15 à 40 % en poids par rapport au poids total de la composition.

2. Composition conforme à la revendication 1, dans laquelle ladite composition est principalement constituée desdits (a), (b) et (c).

3. Composition conforme à la revendication 1, dans laquelle ladite composition est constituée desdits (a), (b) et (c).

4. Composition conforme à la revendication 1, dans laquelle ledit copolymère monomère alpha-alkylvinylique aromatique/cyanure de vinyle est un copolymère alpha-méthylstyrène/acrylonitrile.

5. Composition conforme à la revendication 4, dans laquelle ledit copolymère alpha-méthylstyrène/acrylonitrile est présent en une quantité de 35 à 45 % en poids par rapport au poids total de la composition.

6. Composition conforme à la revendication 4, dans laquelle ledit copolymère alpha-méthylstyrène/acrylonitrile est présent en une quantité d'environ 40 % en poids par rapport au poids total de la composition.

7. Composition conforme à la revendication 1, dans laquelle ledit copolymère de greffage polymérisé en masse est présent en une quantité de 25 à 40 % en poids par rapport au poids total de la composition.

8. Composition conforme à la revendication 1, dans laquelle ledit copolymère de greffage polymérisé en masse est présent en une quantité d'environ 35 % en poids par rapport au poids total de la composition.

9. Composition conforme à la revendication 1, dans laquelle ledit copolymère de greffage polymérisé en émulsion est présent en une quantité de 20 à 30 % en poids par rapport au poids total de la composition.

10. Composition conforme à la revendication 1, dans laquelle ledit copolymère de greffage polymérisé en émulsion est présent en une quantité d'environ 25 % en poids par rapport au poids total de la composition.

11. Composition conforme à la revendication 1, dans laquelle le substrat en copolymère de greffage polymérisé en émulsion est un caoutchouc styrène/butadiène comprenant de 70 à 90 % de butadiène par rapport au poids total du substrat.

12. Composition conforme à la revendication 1, dans laquelle ladite composition comprend en outre de 5 à 20 % en poids d'un copolymère de non-greffage styrène (qui ne porte pas de substituant alkyle)/ acrylonitrile par rapport au poids total de la composition.
